# DEMANDE DE BREVET EUROPEEN

(11) **EP 4 734 397 A1**
(43) Date de publication de la demande: **29.04.2026**
(21) Numéro de dépôt: 25210828.7
(22) Date de dépôt: 23.10.2025
(51) Int. Cl.: H04B 7/155, H04W 84/12, H04W 16/26

(54) **OPTIMISATION D'UN RÉSEAU SANS FIL**

(30) Priorité: 28.10.2024 FR 2411789
(71) Demandeur: SAGEMCOM BROADBAND SAS, 92270 Bois-Colombes (FR)
(72) Inventeur: PARISOT, Clément, 92270 BOIS-COLOMBES (FR); JARDIN, Arthur, 92270 BOIS-COLOMBES (FR)
(74) Mandataire: Cabinet Boettcher

(57) **Abrégé**

Appareil répéteur (23) agencé pour :
- recevoir d'un point d'accès primaire une requête primaire (R1) comprenant une demande d'informations, visant à recevoir des informations primaires représentatives d'un environnement radiofréquence local de l'appareil répéteur (23) ;
- transmettre à chaque station secondaire (25) une requête secondaire (R2) comprenant la demande d'informations, et recevoir de chaque station secondaire des informations secondaires (Is) représentatives d'un environnement radiofréquence local de ladite station secondaire ;
- agréger les informations secondaires (Is) avec les informations primaires (Ip) pour produire des informations agrégées (Ia), et transmettre les informations agrégées au point d'accès primaire.

## Description

L'invention concerne le domaine des réseaux de communication sans fil, notamment des réseaux en Wi-Fi.

### ARRIERE-PLAN DE L'INVENTION

Les appareils appartenant à un réseau de communication sans fil peuvent comprendre une ou plusieurs entités logiques dédiées aux communications, dont les deux principales catégories sont :
- point d'accès (ou AP, pour *Access Point*) : entité logique apte à fournir une connectivité sans fil à d'autres appareils de manière à former un réseau sans fil (qui est par exemple défini selon la norme Wi-Fi) ;
- station : entité logique apte à se connecter au réseau d'un point d'accès.

En tant qu'entités logiques, le point d'accès et la station peuvent être intégrés dans divers appareils (par exemple dans un téléphone, un ordinateur, une imprimante, un routeur, une passerelle domestique, etc.).

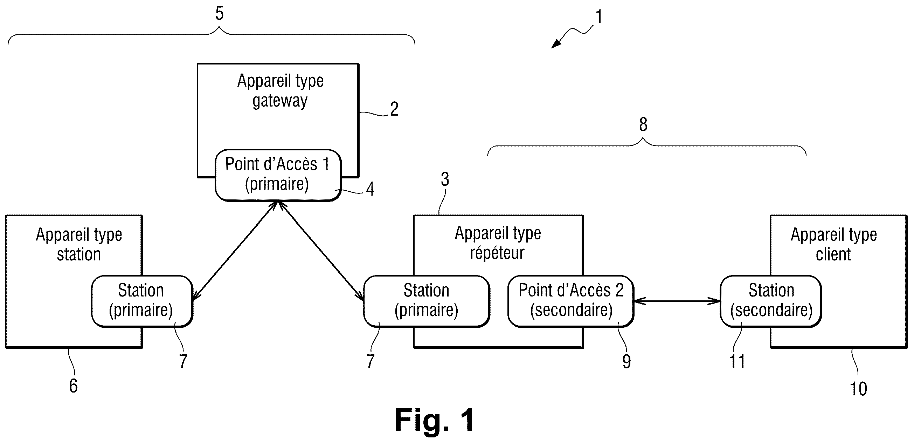

En référence à la figure 1, un réseau sans fil domestique 1 comporte ainsi classiquement une passerelle domestique 2 (ou *gateway,* en anglais), et un appareil que l'on appellera « appareil répéteur » 3.

La passerelle domestique 2 est destinée à interconnecter un réseau local (LAN, pour *Local Area Network*) à un réseau étendu (WAN, pour *Wide Area Network*). La passerelle 2 intègre un point d'accès 4, que l'on appellera « point d'accès primaire », et qui met en œuvre un réseau sans fil 5 que l'on appellera « réseau sans fil primaire ».

La passerelle 2 contrôle la configuration de la couche physique (par exemple la fréquence, la modulation) des connexions sans fil entre les appareils du réseau sans fil primaire 5. Les appareils 6 connectés au réseau sans fil primaire 5 sont appelés ici « clients primaires ». Par « client », on entend un appareil comprenant une ou plusieurs stations, pouvant se connecter au réseau d'un point d'accès, et n'intégrant pas de point d'accès. Par exemple, les clients peuvent être un téléphone portable (*smartphone*), un ordinateur portable, une tablette, un objet connecté (par exemple une montre, un bracelet, une bague, un capteur, une télévision, une enceinte connectée, etc.). On appelle « stations primaires » les stations connectées au réseau sans fil primaire 5 du point d'accès primaire 4. Chaque client primaire 6 comprend donc une ou des stations primaires 7.

L'appareil répéteur 3, quant à lui, est un appareil comprenant à la fois une station et un ou plusieurs points d'accès. La station de l'appareil répéteur 3 peut être connectée au réseau du point d'accès d'un autre appareil (ici à la passerelle 2) et ses points d'accès ont chacun leur propre réseau auquel peuvent être connectées les stations d'autres clients ou appareils répéteurs. Ici, la station de l'appareil répéteur 3 est connectée au réseau sans fil primaire 5 et il s'agit donc d'une station primaire 7.

On considère pour simplifier que l'appareil répéteur 3 comprend un unique point d'accès. On appelle « réseau sans fil secondaire » 8 le réseau formé par le point d'accès de l'appareil répéteur 3, « point d'accès secondaire » le point d'accès 9 de l'appareil répéteur 3, « clients secondaires » les clients 10 connectés au réseau sans fil secondaire 8 (seul un client 10 est représenté ici). Chaque client secondaire 10 comprend donc une station secondaire 11.

L'appareil répéteur 3 peut être :
- un répéteur « classique », c'est-à-dire un dispositif permettant d'étendre la couverture du réseau sans fil primaire (c'est-à-dire que le réseau sans fil primaire et le réseau sans fil secondaire sont connectés au niveau IP), ou
- un dispositif n'effectuant pas de transfert de données entre le réseau sans fil primaire et le réseau sans fil secondaire, par exemple de type boîtier décodeur (il peut s'agir d'un boîtier décodeur « amélioré », comprenant par exemple un ou des haut-parleurs pour restituer des signaux audio).

On comprend donc que le réseau sans fil primaire 5 est mis en œuvre et géré par le point d'accès primaire 4 de la passerelle 2, que la station primaire 7 de l'appareil répéteur 3 est connectée au réseau sans fil primaire 5, tout comme la station primaire 7 du client primaire 6. La station secondaire 11 du client secondaire 10 est connectée au réseau sans fil secondaire 8 mis en œuvre et géré par le point d'accès secondaire 9 de l'appareil répéteur 3.

Bien sûr, la configuration représentée sur la figure 1 est un exemple de configuration. Le réseau sans fil domestique 1 pourrait être différent. Par exemple, un ou plusieurs autres clients primaires 6 (ou aucun) pourraient être connectés au réseau sans fil primaire 5, un ou plusieurs autres clients secondaires 10 pourraient être connectés au réseau sans fil secondaire 8, l'appareil répéteur 3 pourrait intégrer plusieurs points d'accès secondaires 9 pour mettre en œuvre plusieurs réseaux sans fil secondaires 8, etc.

De manière générale, une problématique fondamentale, dans le domaine des technologies de communication sans fil, est d'optimiser les performances de communication (par exemple le débit, la latence, le taux de perte de paquets, etc.) en ajustant la configuration des liens physiques pour réduire les effets dus à des interférences au niveau de la couche physique. Pour pouvoir définir la configuration optimisée des liens physiques, il convient de collecter les données nécessaires à ce choix.

Il existe plusieurs normes et technologies qui permettent la collecte de ces données pertinentes auprès des stations d'un réseau, et qui servent à la gestion des réseaux de communication sans fil.

La collecte de ces données est par exemple prévue dans les amendements suivants aux normes définissant le protocole de communication Wi-Fi : IEEE Std 802.11h^{™} (2003) et IEEE Std 802.11k^{™} (2008). Ces amendements permettent à un point d'accès Wi-Fi d'interroger ses stations pour obtenir différentes données dites « statistiques », qui sont représentatives de la qualité de communication dans le réseau sans fil. Plus précisément, ces données sont représentatives de la capacité de l'environnement radiofréquence et de la couche physique à permettre une performance de communication plus ou moins élevée à travers le réseau sans fil.

Ces données comprennent par exemple le RSSI (pour *Received Signal Strength Indicator*), des résultats de scan, l'occupation de canal, etc., tels que vus par la station et remontés au point d'accès.

Cependant, selon cette technologie, seules les stations primaires 7 associées directement au point d'accès primaire 4 peuvent être sollicitées. Il n'est pas possible pour le point d'accès primaire 4 de récupérer les données des stations « cachées », c'est-à-dire des stations secondaires 11 qui sont connectées aux appareils répéteurs et qui font malgré tout partie du réseau complet 1. Ainsi, dans l'exemple de la figure 1, la passerelle 2 émettant une requête selon le standard IEEE 802.11h^{™} ou 802.11k^{™}, ne peut pas sonder la station secondaire 11 de l'appareil 10 connectée à l'appareil répéteur 3.

Les réseaux Wi-Fi de type *mesh* (que l'on peut traduire par « réseaux maillés ») sont des réseaux comprenant plusieurs points d'accès ou appareils répéteurs, dans lesquels les points d'accès et les appareils répéteurs se coordonnent afin de gérer l'ensemble des réseaux (cet ensemble de réseaux correspond au réseau sans fil domestique 1). Par exemple, le standard *Wi-Fi Easymesh,* qui est défini et certifié par l'organisation *Wi-Fi Alliance,* et qui dépend des protocoles définis dans la norme IEEE 1905.1-2013, permet à une passerelle d'interroger les appareils répéteurs du réseau pour avoir des informations sur tous les appareils (y compris les stations connectées aux réseaux des points d'accès des appareils répéteurs).

Cette solution nécessite cependant le support de la même technologie de réseau *mesh* dans le point d'accès primaire (de la passerelle) et dans chacun des appareils répéteurs. Ainsi, les points d'accès et les appareils répéteurs doivent implémenter des couches supplémentaires afin de faire la gestion des réseaux. Or, ceci n'est pas le cas pour de nombreux appareils (par exemple pour le répéteur de référence EX6120). Cette solution est donc contraignante car elle nécessite d'installer des couches logicielles supplémentaires sur les appareils.

On connaît par ailleurs des passerelles qui implémentent des procédés d'optimisation des performances de communication, mais toutes ces passerelles présentent au moins l'une des deux limitations qui viennent d'être évoquées :
- elles ne permettent pas d'optimiser la performance des stations « cachées » car le point d'accès primaire n'a pas accès aux données nécessaires provenant de ces stations cachées ;
- elles nécessitent l'implémentation d'une couche/technologie supplémentaire au sein des appareils répéteurs et des points d'accès primaires, qui n'est donc pas systématiquement supportée.

On sait en outre que de nombreux appareils répéteurs sont implémentés avec une seule et même interface radio qui est partagée par tous leurs points d'accès et stations, et donc par tous leurs réseaux, y compris le réseau du point d'accès auquel ils sont connectés. Dans l'exemple de la figure 1, l'appareil répéteur 3 utilise la même interface radio pour se connecter au réseau sans fil primaire 5 et au réseau sans fil secondaire 8. Tous les réseaux secondaires de l'appareil répéteur 3 doivent donc avoir la même configuration de la couche physique de transmission radio (et donc utiliser, entre autres, la même fréquence), parce qu'une interface radio n'est capable que d'une seule configuration de la couche physique à la fois, et parce qu'il n'est pas possible pour une interface radio d'alterner entre différentes configurations pour deux réseaux simultanés. Puisque le point d'accès primaire 4 de la passerelle 2 contrôle la configuration de tout son réseau, c'est cette configuration qui s'impose et qui doit être réutilisée par tous les autres réseaux de l'appareil répéteur. L'appareil répéteur 3 ne peut donc pas modifier la configuration de la couche physique de son réseau secondaire 8 afin d'optimiser ses performances. Seul le point d'accès primaire 4 auquel est connecté l'appareil répéteur 3 peut réaliser une telle reconfiguration, si elle est nécessaire. Il s'agit donc d'une autre contrainte à prendre en compte, en plus des deux précédentes limitations.

### OBJET

L'invention a pour objet de permettre à un appareil primaire, intégrant un point d'accès primaire, d'optimiser les performances de communication dans un réseau sans fil global comprenant un réseau primaire mis en œuvre par ledit point d'accès primaire et un réseau secondaire mis en œuvre par un point d'accès secondaire d'un appareil répéteur, et ce :
- en tenant compte des environnements radiofréquences locaux des stations « cachées » pour le point d'accès primaire ;
- sans implémenter de couche logicielle supplémentaire dans le point d'accès primaire ;
- sans nécessiter plusieurs interfaces radio dans l'appareil répéteur.

### RESUME

En vue de la réalisation de ce but, on propose un appareil répéteur, agencé pour être connecté à un réseau sans fil primaire mis en œuvre par un point d'accès primaire, l'appareil répéteur comportant un point d'accès secondaire agencé pour mettre en œuvre un réseau sans fil secondaire auquel peut être connectée au moins une station secondaire, l'appareil répéteur étant agencé pour :
- recevoir du point d'accès primaire une requête primaire comprenant une demande d'informations, visant à recevoir des informations primaires représentatives d'un environnement radiofréquence local de l'appareil répéteur ;
- transmettre à chaque station secondaire une requête secondaire comprenant la demande d'informations, et recevoir de chaque station secondaire des informations secondaires représentatives d'un environnement radiofréquence local de ladite station secondaire ;
- agréger les informations secondaires avec les informations primaires pour produire des informations agrégées, et, en réponse à la requête primaire, transmettre les informations agrégées au point d'accès primaire.

L'appareil répéteur récupère et/ou génère les informations primaires, reçoit les informations secondaires, produit les informations agrégées, et transmet donc, en réponse à la requête primaire, les informations agrégées au point d'accès primaire. L'appareil primaire intégrant le point d'accès primaire, par exemple une passerelle, peut utiliser ces informations agrégées pour optimiser les performances de communication dans le réseau sans fil primaire et, plus généralement, dans le réseau sans fil global comprenant le réseau sans fil primaire et le réseau sans fil secondaire. En effet, dans le cas où l'appareil répéteur ne comprend qu'une interface radio, le point d'accès secondaire de l'appareil répéteur utilise la même configuration de couche physique que le point d'accès primaire, et les optimisations réalisées par l'appareil primaire s'appliquent aussi au réseau sans fil secondaire. L'appareil primaire réalise cette optimisation à partir des informations primaires mais aussi à partir des informations secondaires, qui lui sont transmises en étant agrégées avec les informations primaires. En optimisant les transmissions dans le réseau sans fil primaire, l'appareil primaire tient compte en réalité aussi des caractéristiques des environnements radiofréquences locaux des stations secondaires (informations auxquelles l'appareil primaire n'aurait pas eu connaissance de manière conventionnelle), « sans le savoir », et donc optimise aussi les transmissions dans le réseau sans fil secondaire, sans que cela ne nécessite de couche logicielle supplémentaire dans le point d'accès primaire.

Le procédé de traitement permettant d'aboutir à cette reconfiguration est implémenté entièrement dans l'appareil répéteur et est transparent pour l'appareil primaire.

On propose de plus un appareil répéteur tel que précédemment décrit, dans lequel le réseau sans fil primaire et le réseau sans fil secondaire sont des réseaux Wi-Fi.

On propose de plus un appareil répéteur tel que précédemment décrit, comprenant :
- une unique interface radio ;
- une station primaire permettant à l'appareil répéteur de se connecter au réseau sans fil primaire ;
la station primaire et le point d'accès secondaire utilisant l'unique interface radio.

On propose de plus un appareil répéteur tel que précédemment décrit, dans lequel les informations comprennent au moins un paramètre représentatif d'une qualité d'une plage de radiofréquences pour son utilisation par un réseau sans fil.

On propose de plus un appareil répéteur tel que précédemment décrit, dans lequel le au moins un paramètre comprend :
- un paramètre représentatif, pour une durée prédéfinie, d'une fraction de ladite durée prédéfinie pendant laquelle le canal de radiofréquences est disponible pour communiquer, et/ou
- un paramètre représentatif d'une puissance de réception de trames valides reçues, et/ou
- un paramètre représentatif d'une quantité de trames non déchiffrables reçues, et/ou
- un paramètre représentatif de trames de balise provenant de points d'accès autres que le point d'accès secondaire de l'appareil répéteur.

On propose de plus un appareil répéteur tel que précédemment décrit, dans lequel la requête primaire est une requête *Clear Channel Assessment.*

On propose de plus un appareil répéteur tel que précédemment décrit, dans lequel au moins une station secondaire est intégrée dans un appareil de restitution audio, et dans lequel les informations comprennent au moins un paramètre qui est un paramètre fonctionnel d'une chaîne de données audio dudit appareil de restitution audio.

On propose de plus un appareil répéteur tel que précédemment décrit, dans lequel le au moins un paramètre comprend un paramètre représentatif d'un remplissage d'un buffer de la chaîne de données audio.

On propose de plus un appareil répéteur tel que précédemment décrit, dans lequel les informations comprennent au moins un paramètre tel que, plus sa valeur est élevée, plus des performances de communication sont élevées, les informations primaires comprenant une valeur primaire dudit paramètre et les informations secondaires comprenant des valeurs secondaires dudit paramètre, les informations agrégées comprenant une valeur minimale de la valeur primaire et des valeurs secondaires.

On propose de plus un appareil répéteur tel que précédemment décrit, dans lequel les informations comprennent au moins un paramètre tel que, plus sa valeur est faible, plus des performances de communication sont élevées, les informations primaires comprenant une valeur primaire dudit paramètre et les informations secondaires comprenant des valeurs secondaires dudit paramètre, les informations agrégées comprenant une valeur maximale de la valeur primaire et des valeurs secondaires.

On propose de plus un appareil répéteur tel que précédemment décrit, l'appareil répéteur étant un boîtier décodeur.

On propose de plus un procédé de traitement, mis en œuvre dans l'appareil répéteur tel que précédemment décrit, et comprenant les étapes de :
- recevoir du point d'accès primaire une requête primaire comprenant une demande d'informations, visant à recevoir des informations primaires représentatives d'un environnement radiofréquence local de l'appareil répéteur ;
- transmettre à chaque station secondaire une requête secondaire comprenant la demande d'informations, et recevoir de chaque station secondaire des informations secondaires représentatives d'un environnement radiofréquence local de ladite station secondaire ;
- agréger les informations secondaires avec les informations primaires pour produire des informations agrégées, et, en réponse à la requête primaire, transmettre les informations agrégées au point d'accès primaire.

On propose de plus un programme d'ordinateur comprenant des instructions qui conduisent l'appareil répéteur tel que précédemment décrit à exécuter les étapes du procédé de traitement tel que précédemment décrit.

On propose de plus un support d'enregistrement lisible par ordinateur, sur lequel est enregistré le programme d'ordinateur tel que précédemment décrit.

On propose de plus un système de configuration d'un réseau sans fil global, le système de configuration comportant un appareil répéteur tel que précédemment décrit, dont le point d'accès secondaire est agencé pour mettre œuvre le réseau sans fil secondaire, et un appareil primaire comprenant le point d'accès primaire qui est agencé pour mettre œuvre le réseau sans fil primaire, le réseau sans fil global englobant le réseau sans fil primaire et le réseau sans fil secondaire, l'appareil primaire étant agencé pour :
- transmettre à l'appareil répéteur la requête primaire ;
- recevoir les informations agrégées en réponse à la requête primaire ;
- reconfigurer le réseau sans fil global à partir des informations agrégées pour optimiser les performances de communication dans le réseau sans fil global, la reconfiguration utilisant une méthode de reconfiguration initialement prévue pour être mise en œuvre avec les informations primaires, la méthode de reconfiguration n'étant pas modifiée mais étant mise en œuvre avec les informations agrégées au lieu des informations primaires.

On propose de plus un système de configuration tel que précédemment décrit, dans lequel, pour reconfigurer le réseau sans fil global, l'appareil primaire est agencé pour modifier une fréquence ou un canal de radiofréquences utilisé dans le réseau sans fil primaire.

On propose de plus un procédé de reconfiguration, mis en œuvre dans l'appareil primaire du système de configuration tel que précédemment décrit, et comprenant les étapes de :
- transmettre à l'appareil répéteur la requête primaire ;
- recevoir les informations agrégées ;
- reconfigurer le réseau sans fil global à partir des informations agrégées pour optimiser les performances de communication dans le réseau sans fil global, la reconfiguration utilisant une méthode de reconfiguration initialement prévue pour être mise en œuvre avec les informations primaires, la méthode de reconfiguration n'étant pas modifiée mais étant mise en œuvre avec les informations agrégées au lieu des informations primaires.

On propose de plus un programme d'ordinateur comprenant des instructions qui conduisent l'appareil primaire du système de configuration tel que précédemment décrit à exécuter les étapes du procédé de reconfiguration tel que précédemment décrit.

On propose de plus un support d'enregistrement lisible par ordinateur, sur lequel est enregistré le programme d'ordinateur tel que précédemment décrit.

L'invention sera mieux comprise à la lumière de la description qui suit d'un mode de mise en œuvre particulier non limitatif de l'invention.

### BREVE DESCRIPTION DES DESSINS

Il sera fait référence aux dessins annexés parmi lesquels :
[Fig. 1] la figure 1 représente un réseau sans fil domestique de l'art antérieur ;
[Fig. 2] la figure 2 représente un appareil répéteur, une passerelle et deux clients secondaires ;
[Fig. 3] la figure 3 est une figure similaire à la figure 2, illustrant en outre les échanges de requêtes entre ces appareils ;
[Fig. 4] la figure 4 est un diagramme illustrant les interactions entre la passerelle, l'appareil répéteur et un client secondaire ;
[Fig. 5] la figure 5 est un diagramme représentant les étapes du procédé de traitement mis en œuvre dans l'appareil répéteur ;
[Fig. 6] la figure 6 est un diagramme représentant les étapes du procédé de reconfiguration mis en œuvre dans la passerelle.

### DESCRIPTION DETAILLEE

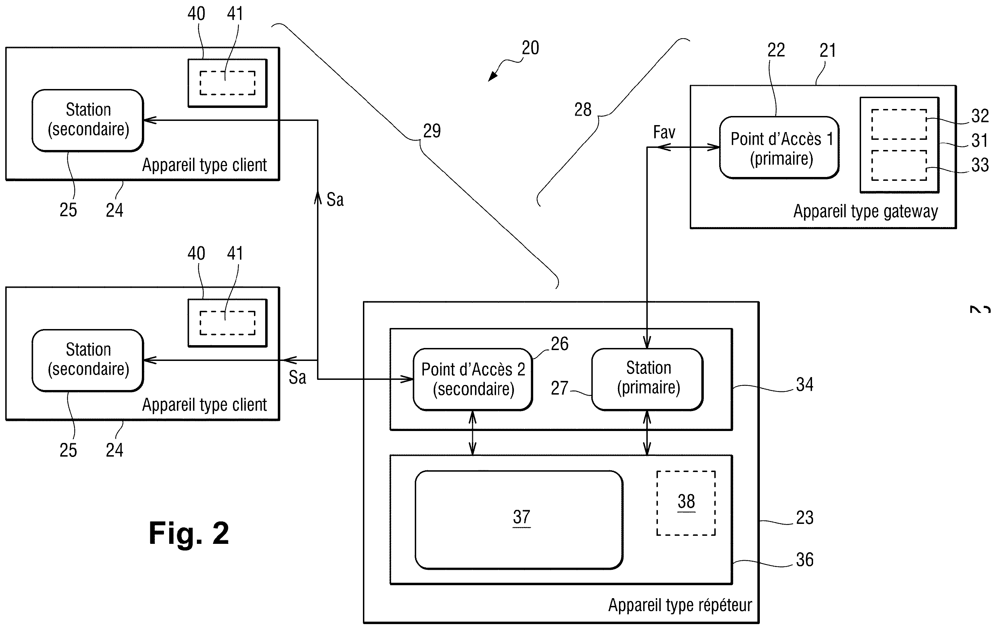

En référence à la figure 2, le réseau sans fil domestique 20 comprend :
- un appareil primaire 21 qui comprend un point d'accès primaire 22 ;
- un appareil répéteur 23 ;
- des clients secondaires 24 qui comprennent chacun une station secondaire 25.

Les définitions qui ont été fournies dans la partie « arrière-plan de l'invention » de la présente description, sont valables pour la description de l'invention.

L'appareil répéteur 23 comprend donc au moins un point d'accès secondaire 26 et une station primaire 27. La station primaire 27 permet à l'appareil répéteur 23 d'être connecté au réseau sans fil primaire 28 mis en œuvre par le point d'accès primaire 22 de l'appareil primaire 21. Le point d'accès secondaire 26 met en œuvre un réseau sans fil secondaire 29 auxquels les clients secondaires 24 sont connectés chacun via leur station secondaire 25.

Dans un mode de réalisation particulier que l'on décrit ici :
- l'appareil primaire 21 est une passerelle domestique ;
- l'appareil répéteur 23 est un boîtier décodeur et ici en l'occurrence un boîtier décodeur amélioré comprenant des haut-parleurs et donc agencé pour restituer lui-même des signaux audio ;
- les clients secondaires 24 sont des appareils de restitution audio, en l'occurrence des enceintes satellites (enceintes connectées).

Le boîtier décodeur 23 diffuse un flux audio-vidéo Fav qui provient possiblement de la passerelle 21 et transmet les signaux audio Sa à ses propres haut-parleurs ainsi qu'aux enceintes connectées 24 pour mettre en œuvre une restitution multicanale. D'autres données circulent bien sûr dans les deux sens entre ces différents appareils.

Le réseau sans fil primaire 28 et le réseau sans fil secondaire 29 sont ici des réseau Wi-Fi.

Outre le point d'accès primaire 22, la passerelle 21 comprend une unité de traitement 31. L'unité de traitement 31 est une unité électronique et logicielle. L'unité de traitement 31 comprend au moins un composant de traitement 32, qui est par exemple un processeur « généraliste », un processeur spécialisé dans le traitement du signal (ou DSP, pour *Digital Signal Processor*), un processeur spécialisé pour les algorithmes d'intelligence artificielle (de type NPU, pour *Neural Processing Unit*), un microcontrôleur, ou bien un circuit logique programmable tel qu'un FPGA (pour *Field Programmable Gate Arrays*) ou un ASIC (pour *Application Specific Integrated Circuit*)*.*

L'unité de traitement 31 comprend aussi une ou des mémoires 33, reliées à ou intégrées dans le ou les composants de traitement 32. Au moins l'une de ces mémoires 33 forme un support d'enregistrement lisible par ordinateur, sur lequel est enregistré au moins un programme d'ordinateur comprenant des instructions qui conduisent l'unité de traitement 31 à exécuter les étapes du procédé de reconfiguration qui va être décrit.

On note ici que l'unité de traitement 31 n'est pas nécessairement complètement distincte du point d'accès primaire 22. Ces entités peuvent partager au moins un module *hardware* (matériel) et/ou *software* (logiciel).

Le boîtier décodeur 23 comprend comme on l'a vu le point d'accès secondaire 26 et la station secondaire 27. Le boîtier décodeur 23 comprend une unique interface radio 34, c'est-à-dire une unique chaîne de transmission radiofréquence, qui est ici intégrée dans un unique *chipset* de communication sans fil.

Le point d'accès secondaire 26 et la station primaire 27 du boîtier décodeur 23 utilisent tous deux cette unique interface radio 34 pour communiquer dans le réseau sans fil primaire 28 et dans le réseau sans fil secondaire 29.

Le boîtier décodeur 23 comprend lui aussi une unité de traitement 36. L'unité de traitement 36 est une unité électronique et logicielle. L'unité de traitement 36 comprend au moins un composant de traitement 37, qui est par exemple un processeur « généraliste », un processeur spécialisé dans le traitement du signal (ou DSP, pour *Digital Signal Processor*), un processeur spécialisé pour les algorithmes d'intelligence artificielle (de type NPU, pour *Neural Processing Unit*), un microcontrôleur, ou bien un circuit logique programmable tel qu'un FPGA (pour *Field Programmable Gate Arrays*) ou un ASIC (pour *Application Specific Integrated Circuit*)*.*

L'unité de traitement 36 comprend aussi une ou des mémoires 38, reliées à ou intégrées dans le ou les composants de traitement. Au moins l'une de ces mémoires 38 forme un support d'enregistrement lisible par ordinateur, sur lequel est enregistré au moins un programme d'ordinateur comprenant des instructions qui conduisent l'unité de traitement 36 à exécuter les étapes du procédé de traitement qui va être décrit.

L'unité de traitement 36 comprend un driver Wi-Fi, possiblement intégré dans le ou les composants de traitement 37.

On note ici que l'unité de traitement 36 n'est pas nécessairement complètement distincte du point d'accès secondaire 26 et de la passerelle primaire 27. Ces entités peuvent partager au moins un module *hardware* (matériel) et/ou *software* (logiciel).

Il est possible que l'une des enceintes satellites 24, qui est connectée au point d'accès secondaire 26 du boîtier décodeur 23, soit proche d'une source d'interférences. Les performances de communication entre cette enceinte 24 et le boîtier décodeur 23 sont mauvaises à cause de cette source d'interférences, ce qui peut dégrader la restitution des signaux audio Sa.

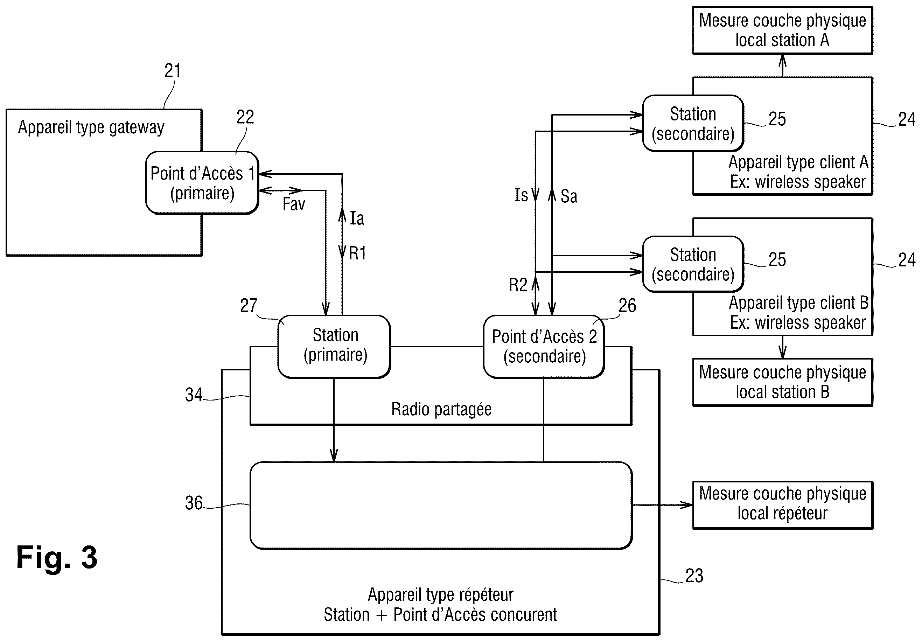

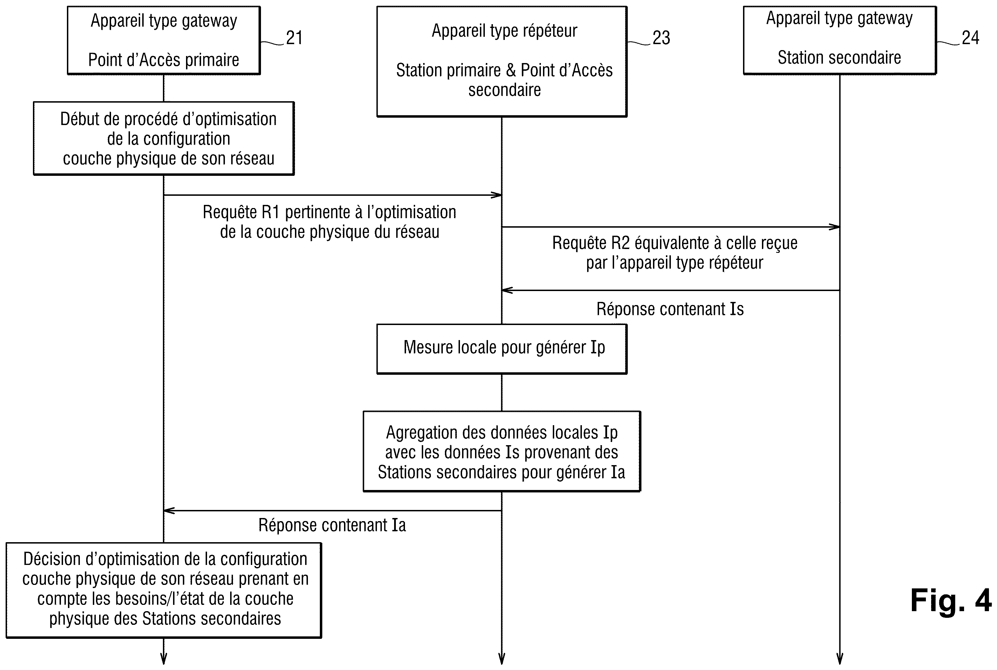

On décrit maintenant, en référence aux figures 3 et 4, la manière dont coopèrent ces différents appareils pour optimiser les performances des communications sans fil dans le réseau sans fil domestique 20 qui englobe le réseau sans fil primaire 28 et le réseau sans fil secondaire 29. Cette optimisation va permettre en particulier d'améliorer le problème d'interférences qui vient d'être évoqué.

La passerelle 21 met en œuvre un procédé de reconfiguration, qui vise initialement à optimiser la couche physique et les performances de communication dans le réseau primaire 28, mais qui va en réalité optimiser les performances de communication dans tout le réseau 20.

La passerelle 21 transmet E20 une requête primaire R1 au boîtier décodeur 23 qui la reçoit via sa station primaire 27. Cette requête primaire R1 contient une demande d'informations, visant à recevoir des informations primaires représentatives uniquement de l'environnement radiofréquence local du boîtier décodeur 23 (et non de l'environnement radiofréquence local des stations secondaires 25 puisque la passerelle 21 n'est pas configurée pour les interroger).

Cette requête primaire R1 est une requête classique, définie selon le standard IEEE Std 802.11h^{™} ou IEEE Std 802.11k^{™}, qui permet à la passerelle 21 d'interroger les stations primaires 27 associées directement à son point d'accès primaire 22, de manière à recevoir des données qui vont permettre à la passerelle 21 d'ajuster la configuration des liens physiques pour réduire les effets dus à des interférences au niveau de la couche physique.

Le boîtier décodeur 23 reçoit la requête primaire R1 au niveau 2 du modèle OSI (c'est à dire *link layer*).

Le boîtier décodeur 23 va alors traiter cette demande d'informations, et donc produire les informations primaires Ip qui concernent son propre environnement radiofréquence local (en réalisant des mesures par exemple), mais il va aussi transmettre à chaque station secondaire 25 de son réseau sans fil secondaire 29 une requête secondaire R2 comprenant la demande d'informations.

La requête secondaire R2 peut différer de la requête primaire R1, mais contient la même demande d'informations. La requête secondaire R2 est une requête équivalente à la requête primaire « originale » R1. La requête secondaire R2 est basée sur la requête primaire R1, et est interprétable par les stations secondaires 25. Par exemple, dans le cas d'un réseau Wi-Fi, les requêtes secondaires R2 équivalentes envoyées aux stations secondaires sont la même requête IEEE Std 802.11k^{™} que la requête primaire originale, simplement avec les valeurs des champs de la requête adaptées si besoin.

Le boîtier décodeur 23 reçoit de chaque station secondaire 25 des informations secondaires Is produites par ladite station secondaire 25, qui sont donc représentatives de l'environnement radiofréquence local de ladite station secondaire.

Puis, le boîtier décodeur 23 agrège les informations secondaires Is, avec les informations primaires Ip qu'il a produites, pour produire des informations agrégées Ia, et il transmet les informations agrégées Ia à la passerelle 21. On voit donc sur la figure 3 que de nouvelles données R1, R2, Is, Ia circulent entre les appareils. Les informations agrégées Ia remplacent les informations primaires Ip mais sont dans le même format.

L'agrégation des informations secondaires Is avec les informations primaires Ip n'est donc pas une simple concaténation de deux champs distincts dans une même trame (un champ pour les informations primaires Ip et un champ pour les informations secondaires Is). Il s'agit plutôt de la combinaison des informations primaires Ip et des informations secondaires Is dans un même champ qui, normalement, contient uniquement les informations primaires Ip, et qui ici contient les informations agrégées Ia.

Les informations demandées par la passerelle 21 peuvent porter sur différents paramètres représentatifs de la qualité des communications dans le réseau.

Les informations comprennent par exemple au moins un paramètre représentatif d'une qualité d'une plage de radiofréquences pour son utilisation par un réseau sans fil. Ledit au moins un paramètre est par exemple représentatif de perturbations et/ou d'interférences sur la plage de radiofréquences.

Les paramètres comprennent alors par exemple un paramètre représentatif, pour une durée prédéfinie, d'une fraction de ladite durée pendant laquelle un canal de radiofréquences est disponible pour communiquer.

La requête primaire R1 envoyée par la passerelle 21 est alors par exemple, dans le standard IEEE Std 802.11h^{™} ou IEEE Std 802.11k^{™}, une requête de type *Clear Channel Assessment* (CCA) qui contient les champs suivants :
- *Channel Number,* qui est le numéro représentant la plage de fréquences sur laquelle l'appareil recevant la requête primaire doit faire une mesure de la qualité de l'environnement radiofréquence ;
- *Measurement Start Time,* qui est la valeur d'un compteur périodique du point d'accès primaire envoyant la requête primaire, permettant d'indiquer le moment auquel la mesure doit commencer. La valeur de ce compteur est indépendamment partagée avec l'appareil recevant la requête, et sert en général à la synchronisation temporelle entre un point d'accès et ses stations ;
- *Measurement Duration :* la durée pendant laquelle la mesure doit être faite.

Dans ce cas, le boîtier décodeur 23 enverra une requête secondaire R2 équivalente de type *Clear Channel Assessment* aux stations secondaires 25 qui ont déclaré supporter une telle requête (lors de l'étape d'association entre un point d'accès et une station, la station indique au point d'accès si elle supporte le traitement de la requête R1) :
- avec la même valeur dans les champs *Channel Number* et *Measurement Duration ;*
- avec une valeur du compteur périodique du point d'accès secondaire du boîtier décodeur dans le champ *Measurement Start Time,* correspondant au même instant pour le début de la mesure que celui indiqué dans la requête primaire. Le compteur périodique du point d'accès 26 du boîtier décodeur 23 n'est en général pas synchronisé avec le compteur périodique du point d'accès primaire 22 de la passerelle 21, et donc le même instant n'est pas représenté par la même valeur dans les compteurs de chaque appareil.

Les valeurs des champs des requêtes secondaires R2 envoyées par le boîtier décodeur 23 ne seront donc pas identiques à celles dans la requête primaire R1, mais représenteront la même demande de données.

En réponse à la requête secondaire R2, les stations secondaires 25 fournissent un message de réponse comprenant des données statistiques pertinentes, telles que la valeur de *CCA Busy Fraction* pour « *CCA report »* ou la valeur de *Channel load* pour « *Channel load report* » qui indiquent la fraction du temps qui est réellement disponible pour communiquer car il n'y pas d'interférence sur le canal radio. Chacune des données envoyées indique d'une manière différente la qualité et l'état de la couche physique qui est notamment fonction des perturbations. Ces données permettent donc d'indiquer et d'évaluer la présence de perturbations.

La requête *Clear Channel assessment* est un exemple de requête qui peut être utilisée, mais ce n'est pas le seul.

Comme on l'a vu, les informations demandées peuvent porter sur un paramètre autre qu'un paramètre représentatif de la disponibilité d'un canal de radiofréquences pour envoyer des trames.

Les paramètres utilisés peuvent comprendre un paramètre représentatif d'une quantité de trames valides reçues.

La requête est alors par exemple une requête *Receive Power Indicator (RPI) Histogram Request.* Cette requête permet d'obtenir un histogramme indiquant la quantité de trames Wi-Fi reçues dans différents intervalles de puissance de réception.

Les paramètres utilisés peuvent comprendre un paramètre représentatif d'une quantité de trames non déchiffrables reçues.

La requête est alors par exemple une requête *Noise Histogram Request.* Cette requête permet d'obtenir un histogramme (en puissance) des signaux reçus qui n'étaient pas déchiffrables en trames Wi-Fi, sur un canal en question (le signal reçu est considéré comme du bruit).

Les paramètres utilisés peuvent comprendre un paramètre représentatif de trames de balises reçues, provenant de points d'accès autre que le point d'accès secondaire 26 du boîtier décodeur 23.

La requête est alors par exemple une requête *Beacon request* qui permet d'obtenir des informations qu'annoncent d'autres points d'accès à propos d'eux-mêmes, tels qu'ils sont vus par une station.

Les paramètres utilisés peuvent comprendre un paramètre représentatif des performances de communication.

La requête est alors par exemple une requête *STA statistics request* qui demande diverses statistiques relatives à la performance (par exemple quantité de *Retry, Transmitted, Received, RTS Success, RTS Failure, Access delay*).

Les paramètres utilisés peuvent comprendre un paramètre représentatif de la qualité des connexions entre le point d'accès secondaire 26 du boîtier décodeur 23 et les stations secondaires 25. Il s'agit par exemple, pour des réseaux Wi-Fi, d'un pourcentage de perte ou de renvoi de paquets (% *packet lost* / *retry*), d'un histogramme du *Modulation Coding Scheme* (MCS) utilisé, qui permet de renseigner sur la qualité de la communication Wi-Fi, du *jitter* (gigue), etc. On note que ces données ne sont pas demandées en paramètres de requêtes envoyées par la passerelle 21. Le boîtier décodeur 23 récupère ces données en interne lorsqu'il reçoit une requête pour d'autres types d'informations. Le boîtier décodeur 23 utilise ces données comme entrées à l'algorithme d'agrégation.

Ici, comme on l'a vu, l'appareil répéteur 23 est un boîtier décodeur et les stations secondaires 25 sont intégrées dans les enceintes satellites 24.

Le boîtier décodeur 23 transmet des signaux audio Sa aux enceintes 24 pour leur restitution.

Les paramètres utilisés peuvent comprendre un paramètre fonctionnel de la chaîne de données audio 40 des enceintes satellites 24. Pour une enceinte 24, la « chaîne de données audio » 40 comprend les fonctions *hardware* et *software* entre la réception des signaux audio émis par le boîtier décodeur 23, et le ou les haut-parleurs de ladite enceinte 24.

Ce paramètre est par exemple représentatif du remplissage des *buffers* audio 41 des enceintes 24. Il s'agit par exemple de l'histogramme de la santé des *buffers* audio. Le remplissage des *buffers* audio 41 est en effet représentatif de la qualité de transmission entre les sources de signaux audio et les récepteurs, et peuvent donc servir à qualifier les performances de communication.

On utilise donc des mesures de fiabilité fonctionnelle : la fonction est l'émission de son par les enceintes satellites 24, la mesure de sa fiabilité est la mesure de la quantité de coupures audio, et chaque instance de *buffer* audio 41 vide est une potentielle coupure audio. Il s'agit donc d'une manière de mesurer la performance du lien réseau entre le boîtier décodeur 23 et les enceintes satellites 24.

On note que, si le boîtier décodeur 23 n'intègre pas de haut-parleur et donc ne contient pas de chaîne de données audio, il n'est pas possible de calculer ce paramètre pour le boîtier décodeur 23, ce qui pourrait poser un problème pour agréger les informations secondaires Is avec les informations primaires Ip. Dans ce cas, l'unité de traitement 36 du boîtier décodeur 23 va utiliser comme information primaire Ip, pour produire les informations agrégées Ia, une valeur prédéfinie pour ce paramètre, qui est nulle par exemple.

On note que ce qui vient d'être dit peut être vrai pour des paramètres autres que des paramètres fonctionnels d'une chaîne de données audio.

Comme on l'a vu, le boîtier décodeur 23 reçoit donc de chaque station secondaire 25 des informations secondaires Is produites par ladite station secondaire 25, qui sont représentatives de l'environnement radiofréquence local de ladite station secondaire 25. Le boîtier décodeur 23 agrège alors les informations secondaires Is, avec les informations primaires Ip qu'il a lui-même produites, pour produire des informations agrégées Ia, et transmet les informations agrégées Ia à la passerelle 21.

Les informations agrégées Ia ont le même format que les informations primaires Ip qui auraient été produites par le boîtier décodeur 23 s'il n'avait pas interrogé les stations secondaires 25. Les informations agrégées Ia sont issues d'une combinaison des informations primaires Ip et des informations secondaires Is qui ne permet donc plus de distinguer l'origine desdites informations. Les informations agrégées Ia sont donc représentatives à la fois de l'environnement radiofréquence local du boîtier décodeur 23, mais aussi des environnements radiofréquences locaux des enceintes 24 qui sont connectées via leur station secondaire 25 au point d'accès secondaire 26 du boîtier décodeur 23.

L'agrégation peut être réalisée de différentes manières et dépend du paramètre demandé.

Les informations demandées peuvent comprendre au moins un paramètre tel que, plus sa valeur est élevée, plus les performances de communication sont élevées (c'est-à-dire plus la qualité de la couche physique est élevée). Les informations primaires Ip comprennent une valeur primaire dudit paramètre et les informations secondaires Is comprennent des valeurs secondaires dudit paramètre (une pour chaque station secondaire). Les informations agrégées Ia comprennent alors par exemple une valeur minimale de la valeur primaire et des valeurs secondaires.

Cela concerne par exemple la requête *Receive Power Indicator Histogram.* Le paramètre est donc par exemple représentatif de la puissance de réception de trames valides reçues.

Les informations demandées peuvent comprendre au moins un paramètre tel que, plus sa valeur est faible, plus les performances de communication sont élevées. Les informations primaires Ip comprennent une valeur primaire dudit paramètre et les informations secondaires Is comprennent des valeurs secondaires dudit paramètre (une pour chaque station secondaire). Les informations agrégées comprennent alors par exemple une valeur maximale de la valeur primaire et des valeurs secondaires.

Cela concerne par exemple les requêtes *Clear Channel Assesment, Channel Load Request* ou *Noise Histogram Request.* Le paramètre est donc par exemple représentatif de la disponibilité d'un canal de communication pour envoyer des trames, ou bien d'une quantité de trames non déchiffrables reçues, ou bien de la puissance des signaux reçus qui n'ont pas pu être déchiffrés en trames.

Le boîtier décodeur 23 transmet alors les informations agrégées Ia à la passerelle 21.

La passerelle 21 reçoit E21 donc la réponse à sa requête primaire R1 sous la forme d'informations agrégées Ia. La passerelle 21 a envoyé la requête primaire R1 pour récolter des données/informations/statistiques afin de faire un choix de reconfiguration des réseaux de ses points d'accès 22 qui améliore/optimise la performance du réseau. Par conséquent, lorsqu'elle a reçu toutes les réponses à toutes les requêtes primaires R1 qu'elle a envoyées, la passerelle 21 lance le procédé de reconfiguration E22, en fonction des informations remontées. Le procédé permet notamment de corriger les problèmes dans le réseau afin d'améliorer les performances globales de communication. La reconfiguration utilise une méthode de reconfiguration initialement prévue pour être mise en œuvre avec les informations primaires, la méthode de reconfiguration n'étant pas modifiée mais étant mise en œuvre avec les informations agrégées au lieu des informations primaires.

Grâce aux informations agrégées remontées par le boîtier décodeur 23, la passerelle 21 détecte d'éventuelles interférences ou perturbations locales aux stations secondaires 25 affectant la performance du réseau sans-fil 20 pour ces stations secondaires. La passerelle 21 est en capacité de prendre une décision (de reconfiguration des réseaux qu'elle gère) qui est telle que ces interférences ne provoquent plus de problème.

Par exemple, la décision de la passerelle 21 peut consister à changer la fréquence ou le canal de radiofréquences utilisé par son réseau, si des interférences ou perturbations sont détectées (localement ou par l'intermédiaire de requêtes envoyées à d'autres appareils) dans le canal de radiofréquences couramment utilisé. Si la passerelle 21 reçoit (dans la réponse à une requête d'informations sur la qualité de l'environnement radiofréquence local qu'elle a envoyée à un répéteur ou un client) des données indiquant qu'il y a une interférence sur le canal de radiofréquences actuellement utilisé par son réseau, la passerelle 21 choisira un autre canal de radiofréquences n'incluant pas la fréquence problématique.

Le choix de la nouvelle fréquence ou du nouveau canal peut être fait au hasard ou en récupérant des informations sur les autres fréquences ou canaux potentiels afin de comparer la qualité de l'environnement radiofréquence aux différentes plages de fréquences.

Par exemple, si la passerelle 21, à travers les différentes requêtes envoyées (entre autres) à un appareil répéteur connecté à son réseau (tel que le boîtier décodeur 23), est informée qu'il y a beaucoup de perturbations sur le canal de radiofréquences actuellement utilisé (par elle-même, et donc aussi par le boîtier décodeur 23 et les stations secondaires 25 du boîtier décodeur 23) mais peu de perturbations sur un autre canal de radiofréquences disponible, elle pourra choisir de changer de canal pour faire en sorte de fonctionner sur cet autre canal.

Grâce à cette décision de la passerelle 21, les stations secondaires 25 ne subiront plus les effets des interférences locales et leurs performances seront améliorées. Ceci aura été possible grâce au boîtier décodeur 23 qui a indirectement informé la passerelle 21 des interférences en question.

Dans le présent exemple, nous avons considéré la détection de perturbations radiofréquences. Toutefois, d'autres conditions perturbatrices pouvant être à l'origine d'une perte de performance de communication pourront être détectées sur la base des informations récoltées auprès des stations secondaires 25.

Comme on l'a vu, le boîtier décodeur 23 est agencé pour transférer aux stations secondaires 25 une requête secondaire R2 équivalente à la requête primaire R1. Le boîtier décodeur 23 est de plus agencé pour agréger des données récoltées auprès des stations secondaires 25 en réponse à la requête R2 transférée, les informations agrégées Ia étant ensuite transmises à la passerelle 21.

Il s'ensuit que l'un des avantages de l'invention par rapport à l'art antérieur est l'amélioration de la pertinence des données qui sont prises en compte par la passerelle 21 pour configurer le réseau. En particulier, les informations locales des stations secondaires 25 récoltées grâce au transfert de la requête opérée par le boîtier décodeur 23 permettent de renseigner la passerelle 21 sur de potentielles limitations qui n'auraient pas pu être détectées dans l'art antérieur (par exemple la présence de perturbations, les causes de limitations de la performance de communication du réseau, etc.). En outre, l'agrégation des données permet encore d'accroître la pertinence des données qui sont remontées à la passerelle 21 pour (re)configurer le réseau. Grâce à des données plus pertinentes, la passerelle 21 peut mieux optimiser la configuration de l'ensemble des réseaux, en optimisant le ou les réseaux sans fil secondaires 29 via un changement de configuration du réseau primaire, ce qui n'était le cas dans l'art antérieur. Ainsi, l'amélioration apportée par l'invention se matérialise concrètement au sein de la passerelle 21 qui peut, grâce à des données plus pertinentes, prendre des décisions mieux adaptées aux conditions réelles de l'ensemble du réseau et ainsi adapter au mieux la configuration du réseau. L'amélioration de la configuration du réseau a pour conséquence que les performances de communication de tout ou partie du réseau peuvent être améliorées en temps réel. Toutefois, l'invention ne modifie pas le procédé de gestion du réseau en tant que tel qui est mis en œuvre de manière classique au sein de la passerelle 21. Ce sont juste les données qui lui sont fournies en entrée qui sont plus pertinentes et complètes.

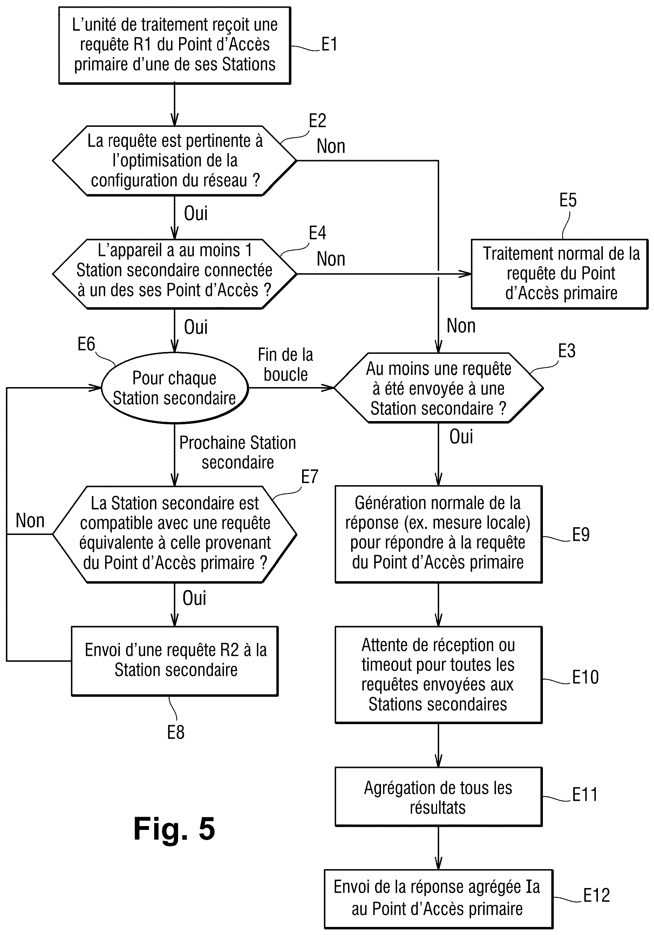

On décrit maintenant, en référence à la figure 5, de manière synthétique, les différentes étapes du procédé de traitement, qui sont mises en œuvre par l'unité de traitement 36 du boîtier décodeur 23.

Le boîtier décodeur 23 reçoit via sa station primaire 27 une requête primaire R1 du point d'accès primaire 22 de la passerelle 21. La requête est transmise à l'unité de traitement 36 : étape E1.

L'unité de traitement 36 du boîtier décodeur 23 vérifie si cette requête concerne l'optimisation de la configuration du réseau : étape E2.

Si ce n'est pas le cas, le procédé passe à l'étape E5 : traiter la requête primaire normalement.

Si c'est le cas, l'unité de traitement 36 vérifie si le boîtier décodeur 23 a au moins une station secondaire 25 connectée à son point d'accès secondaire 26 : étape E4.

Si ce n'est pas le cas, le boîtier décodeur 23 passe à l'étape E5. Le boîtier décodeur 23 ne transmet pas de requête secondaire et ne reçoit pas d'information secondaire. L'unité de traitement 36 pilote les opérations (mesures locales par exemple) pour produire les informations primaires Ip relatives à l'environnement radiofréquence local du boîtier décodeur 23, puis envoie à la passerelle 21 ces informations primaires Ip. Ceci correspond au fonctionnement qu'a tout le temps un appareil répéteur ne comprenant pas l'invention.

A l'étape E4, si le boîtier décodeur 23 a bien au moins une station secondaire 25 connectée à son point d'accès secondaire 26, une boucle de transmission aux stations secondaires débute : étape E6.

Pour la première station secondaire 25, l'unité de traitement 36 vérifie si cette station 25 est compatible avec une requête secondaire équivalente à la requête primaire : étape E7.

Si ce n'est pas le cas, le procédé repasse à l'étape E6, et la station secondaire 25 suivante est traitée.

Si c'est le cas, le boîtier décodeur 23 envoie une requête secondaire R2 à la station secondaire 25 (étape E8), et le procédé repasse à l'étape E6 : la station secondaire 25 suivante est traitée.

Lorsque la boucle est terminée, c'est-à-dire lorsque les requêtes secondaires R2 ont été transmises à toutes les stations secondaires 25 compatibles, le procédé passe à l'étape E3.

A cette étape E3, l'unité de traitement 36 vérifie si au moins une requête secondaire R2 a été envoyée à une station secondaire 25.

Si c'est le cas, l'unité de traitement 36 pilote les opérations (mesures locales par exemple) pour produire les informations primaires Ip relatives à l'environnement radiofréquence local du boîtier décodeur : étape E9.

L'unité de traitement 36 attend la réception (ou *timeout)* pour toutes les requêtes envoyées aux stations secondaires 25 : étape E10.

Puis, l'unité de traitement 36 agrège les informations primaires Ip produites par le boîtier décodeur 23, et toutes les informations secondaires Is produites par toutes les stations secondaires 25 concernées, pour produire les informations agrégées Ia : étape E11.

L'unité de traitement 36 transmet alors les informations agrégées Ia au point d'accès primaire 22 de la passerelle 21 : étape E12.

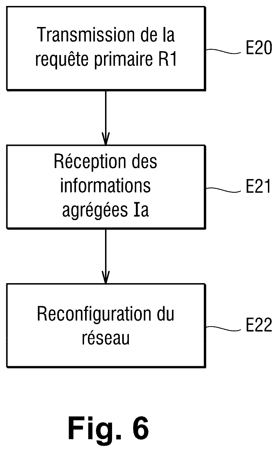

On décrit maintenant, en référence à la figure 6, de manière synthétique, les différentes étapes du procédé de reconfiguration, mises en œuvre par l'unité de traitement 32 de la passerelle 21.

L'unité de traitement 32 utilise le point d'accès primaire 22 pour transmettre au boîtier décodeur 23 la requête primaire R1 : étape E20.

Puis, l'unité de traitement 32 reçoit les informations agrégées Ia via le point d'accès primaire 22 : étape E21.

L'unité de traitement 32 reconfigure alors le réseau sans fil primaire 28, et donc le réseau sans fil global 20, à partir des informations agrégées, pour optimiser les performances de communication dans le réseau sans fil global 20 : étape E22.

Ainsi, dès lors que les informations agrégées sont remontées à la passerelle 21 par l'appareil répéteur 23, la passerelle 21 analyse ces données en les comparant à des seuils prédéterminés. Par exemple, si les valeurs sont supérieures à un seuil de référence, la passerelle 21 considérera ces valeurs comme représentatives d'une interférence. Ces seuils peuvent être propriétaires (et donc dépendent de l'implémentation et du fabricant de la passerelle).

Il est important de noter que l'invention ne nécessite pas la définition de nouveaux types de requête dans les normes des protocoles de communication, afin de rester compatible avec les produits existants et donc d'être aussi interopérable que possible.

Bien entendu, l'invention n'est pas limitée au mode de réalisation décrits mais englobe toute variante entrant dans le champ de l'invention tel que défini par les revendications.

L'appareil répéteur n'est pas nécessairement un boîtier décodeur comprenant des haut-parleurs. Il peut s'agir d'un boîtier décodeur sans haut-parleur et, plus généralement, de tout appareil comprenant à la fois au moins un point d'accès et une station. Le point d'accès primaire n'est pas nécessairement intégré dans une passerelle domestique.

Les appareils de restitution audio ne sont pas nécessairement des enceintes satellites, il pourrait s'agir par exemple d'une barre de son, d'un amplificateur hi-fi, etc. Les clients secondaires ne sont pas nécessairement des appareils de restitution audio.

Les architectures des appareils peuvent être différentes de celles décrites ici.

## Revendications

1. Appareil répéteur (23), agencé pour être connecté à un réseau sans fil primaire (28) mis en œuvre par un point d'accès primaire (22), l'appareil répéteur comportant un point d'accès secondaire (26) agencé pour mettre en œuvre un réseau sans fil secondaire (29) auquel peut être connectée au moins une station secondaire (25), l'appareil répéteur étant agencé pour :
- recevoir du point d'accès primaire (22) une requête primaire (R1) comprenant une demande d'informations, visant à recevoir des informations primaires (Ip) représentatives d'un environnement radiofréquence local de l'appareil répéteur (23) ;
- transmettre à chaque station secondaire (25) une requête secondaire (R2) comprenant la demande d'informations, et recevoir de chaque station secondaire des informations secondaires (Is) représentatives d'un environnement radiofréquence local de ladite station secondaire ;
- agréger les informations secondaires (Is) avec les informations primaires (Ip) pour produire des informations agrégées (Ia), et, en réponse à la requête primaire (R1), transmettre les informations agrégées au point d'accès primaire.

2. Appareil répéteur (23) selon la revendication 1, dans lequel le réseau sans fil primaire (28) et le réseau sans fil secondaire (29) sont des réseaux Wi-Fi.

3. Appareil répéteur (23) selon l'une des revendications précédentes, comprenant :
- une unique interface radio (34) ;
- une station primaire (27) permettant à l'appareil répéteur de se connecter au réseau sans fil primaire (28) ;
la station primaire (27) et le point d'accès secondaire (26) utilisant l'unique interface radio.

4. Appareil répéteur selon l'une des revendications précédentes, dans lequel les informations comprennent au moins un paramètre représentatif d'une qualité d'une plage de radiofréquences pour son utilisation par un réseau sans fil.

5. Appareil répéteur (23) selon la revendication 4, dans lequel le au moins un paramètre comprend :
- un paramètre représentatif, pour une durée prédéfinie, d'une fraction de ladite durée prédéfinie pendant laquelle le canal de radiofréquences est disponible pour communiquer, et/ou
- un paramètre représentatif d'une puissance de réception de trames valides reçues, et/ou
- un paramètre représentatif d'une quantité de trames non déchiffrables reçues, et/ou
- un paramètre représentatif de trames de balise provenant de points d'accès autres que le point d'accès secondaire (26) de l'appareil répéteur (23).

6. Appareil répéteur (23) selon les revendications 2 et 5, dans lequel la requête primaire est une requête *Clear Channel Assessment.*

7. Appareil répéteur (23) selon l'une des revendications précédentes, dans lequel au moins une station secondaire (25) est intégrée dans un appareil de restitution audio (24), et dans lequel les informations comprennent au moins un paramètre qui est un paramètre fonctionnel d'une chaîne de données audio (40) dudit appareil de restitution audio.

8. Appareil répéteur (23) selon la revendication 7, dans lequel le au moins un paramètre comprend un paramètre représentatif d'un remplissage d'un buffer (41) de la chaîne de données audio (40).

9. Appareil répéteur (23) selon l'une des revendications précédentes, dans lequel les informations comprennent au moins un paramètre tel que, plus sa valeur est élevée, plus des performances de communication sont élevées, les informations primaires comprenant une valeur primaire dudit paramètre et les informations secondaires comprenant des valeurs secondaires dudit paramètre, les informations agrégées comprenant une valeur minimale de la valeur primaire et des valeurs secondaires.

10. Appareil répéteur (23) selon l'une des revendications précédentes, dans lequel les informations comprennent au moins un paramètre tel que, plus sa valeur est faible, plus des performances de communication sont élevées, les informations primaires comprenant une valeur primaire dudit paramètre et les informations secondaires comprenant des valeurs secondaires dudit paramètre, les informations agrégées comprenant une valeur maximale de la valeur primaire et des valeurs secondaires.

11. Appareil répéteur (23) selon l'une des revendications précédentes, l'appareil répéteur étant un boîtier décodeur.

12. Procédé de traitement, mis en œuvre dans l'appareil répéteur (23) selon l'une des revendications précédentes, et comprenant les étapes de :
- recevoir (E1) du point d'accès primaire (22) une requête primaire (R1) comprenant une demande d'informations, visant à recevoir des informations primaires (Ip) représentatives d'un environnement radiofréquence local de l'appareil répéteur (23) ;
- transmettre (E8) à chaque station secondaire (25) une requête secondaire (R2) comprenant la demande d'informations, et recevoir de chaque station secondaire des informations secondaires (Is) représentatives d'un environnement radiofréquence local de ladite station secondaire ;
- agréger (E11) les informations secondaires (Is) avec les informations primaires (Ip) pour produire des informations agrégées (Ia), et, en réponse à la requête primaire (R1), transmettre (E12) les informations agrégées au point d'accès primaire.

13. Programme d'ordinateur comprenant des instructions de code de programme pour l'exécution des étapes du procédé de traitement selon la revendication 12 lorsque ledit programme est exécuté sur un ordinateur.

14. Support d'enregistrement lisible par ordinateur, sur lequel est enregistré le programme d'ordinateur selon la revendication 13.

15. Système de configuration d'un réseau sans fil global (20), le système de configuration comportant un appareil répéteur (23) selon l'une des revendications 1 à 11, dont le point d'accès secondaire (26) est agencé pour mettre œuvre le réseau sans fil secondaire (29), et un appareil primaire (21) comprenant le point d'accès primaire (22) qui est agencé pour mettre œuvre le réseau sans fil primaire (28), le réseau sans fil global englobant le réseau sans fil primaire et le réseau sans fil secondaire, l'appareil primaire (21) étant agencé pour :
- transmettre à l'appareil répéteur (23) la requête primaire (R1) ;
- recevoir les informations agrégées (Ia) en réponse à la requête primaire ;
- reconfigurer le réseau sans fil global à partir des informations agrégées pour optimiser les performances de communication dans le réseau sans fil global, la reconfiguration utilisant une méthode de reconfiguration initialement prévue pour être mise en œuvre avec les informations primaires, la méthode de reconfiguration n'étant pas modifiée mais étant mise en œuvre avec les informations agrégées au lieu des informations primaires.

16. Système de configuration selon la revendication 15, dans lequel, pour reconfigurer le réseau sans fil global, l'appareil primaire (21) est agencé pour modifier une fréquence ou un canal de radiofréquences utilisé dans le réseau sans fil primaire (28).

17. Procédé de reconfiguration, mis en œuvre dans l'appareil primaire (21) du système de configuration selon la revendication 15 ou 16, et comprenant les étapes de :
- transmettre (E20) à l'appareil répéteur (23) la requête primaire (R1) ;
- recevoir (E21) les informations agrégées (Ia) ;
- reconfigurer (E22) le réseau sans fil global à partir des informations agrégées pour optimiser les performances de communication dans le réseau sans fil global, la reconfiguration utilisant une méthode de reconfiguration initialement prévue pour être mise en œuvre avec les informations primaires, la méthode de reconfiguration n'étant pas modifiée mais étant mise en œuvre avec les informations agrégées au lieu des informations primaires.

18. Programme d'ordinateur comprenant des instructions de code de programme pour l'exécution des étapes du procédé de reconfiguration selon la revendication 17 lorsque ledit programme est exécuté sur un ordinateur.

19. Support d'enregistrement lisible par ordinateur, sur lequel est enregistré le programme d'ordinateur selon la revendication 18.
